# DEMANDE DE BREVET EUROPEEN

(11) **EP 4 552 817 A1**
(43) Date de publication de la demande: **14.05.2025**
(21) Numéro de dépôt: 24202791.0
(22) Date de dépôt: 26.09.2024
(51) Int. Cl.: B29C 33/48, B29C 70/32, B29C 53/56, F17C 1/06, B29C 70/44

(54) **PROCÉDÉ DE FABRICATION D'UN RÉSERVOIR ÉTANCHE POUR CONTENIR UN GAZ ET/OU UN FLUIDE**

(30) Priorité: 08.11.2023 FR 2312150
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: PAPIN, Philippe, 78350 LES LOGES-EN-JOSAS (FR)
(74) Mandataire: Air Liquide

(57) **Abrégé**

Un aspect de l'invention concerne un procédé de fabrication d'un réservoir étanche pour contenir un gaz et/ou un liquide, comprenant un étape de formation d'une paroi étanche du réservoir, comprenant les sous-étapes suivantes :
- Formation d'une enveloppe par application d'au moins un tricot recouvrant la surface externe du mandrinle tricot comprenant des fils tricotés d'un matériau thermoplastique colmatable par chaleur,
- Enroulement filamentaire, autour de l'enveloppe, de sections successives d'une première bande comprenant un matériau thermoplastique colmatable par chaleur renforcé de fibres, de manière à fusionner les sections successives bobinées de la première bande,
- Refroidissement de l'enveloppe et de la première bande pour former la paroi étanche en une seule matière.

## Description

### DOMAINE TECHNIQUE DE L'INVENTION

Le domaine technique de l'invention concerne les procédés de fabrication de réservoirs étanches, ou récipients étanches, notamment mais non limitativement les réservoirs sous pression en matériau composite.

La présente invention concerne un procédé de fabrication d'un réservoir étanche utilisant des matériaux thermoplastiques renforcés par des fibres dans le processus de fabrication.

### ARRIERE-PLAN TECHNOLOGIQUE DE L'INVENTION

Les conditions de stockage de gaz ou de liquide se sont récemment améliorées avec l'apparition des réservoirs étanches composites qui comprennent un matériau fibreux, c'est-à-dire qui est renforcé par des fibres, comme structure de paroi, ou enveloppe externe.

Par « réservoir étanche », on entend un réservoir ou récipient étanche aux liquides et/ou aux gaz. Plus précisément, on entend un réservoir qui présente, pour ces liquides et/ou ces gaz, une perméabilité inférieure à une limite maximale prescrite par l'application.

Par exemple, un réservoir étanche destiné à une application de transport d'hydrogène sous forme comprimée à haute pression présente une perméabilité à l'hydrogène lorsque ce gaz est comprimé dans une gamme de pressions allant de 30 MPa à 70 MPa (soit de 300 bars à 700 bars).

Il est connu, pour permettre le stockage de l'hydrogène dans ces conditions de pression, d'utiliser une architecture de réservoir étanche dite de type III ou IV. Cette architecture comporte, de l'intérieur vers l'extérieur, une bouteille étanche, aussi appelée « liner interne » selon la terminologie couramment employée, et une structure externe de renfort réalisée par enroulement filamentaire.

Le rôle du liner interne est principalement d'assurer une fonction d'étanchéité au gaz (il doit être le plus imperméable possible à l'hydrogène). Le rôle de la structure externe de renfort est principalement d'assurer une fonction de résistance mécanique à la pression.

Dans les réservoirs de type III, le liner interne est métallique. Dans les réservoirs de type IV, le liner interne est en polymère et réalisé par roto-moulage ou par extrusion-soufflage par exemple.

Un nouveau type de réservoir est décrit dans le document WO2011143723A2. L'étanchéité au gaz y est réalisée autrement que par un liner interne métallique. Le liner est ainsi remplacé par une enveloppe interne étanche formée en bobinant et en chauffant une bande de revêtement formée d'un matériau thermoplastique colmatable par chaleur autour d'un gabarit (ou mandrin). Ce gabarit est métallique, démontable en de multiple arceaux s'emboitant de façon circonférentielle les uns aux autres, permettant d'être amovible et réutilisable. Le gabarit présente de plus une forme qui correspond à la forme du réservoir. Typiquement, le gabarit présente une forme cylindrique et, de chaque côté axial, une facette frontale arrondie, en forme de calotte.

Afin d'assurer la solidité mécanique et pour consolider la barrière aux gaz, l'enveloppe interne étanche est protégée par une deuxième enveloppe, appelée enveloppe externe protectrice, faite aussi à partir d'une bande bobinée, comprenant un matériau thermoplastique colmatable par chaleur et renforcé de fibres qui sont de préférence continues. Cette deuxième enveloppe constitue la structure externe de renfort du réservoir étanche.

Cette enveloppe externe est, comme l'enveloppe interne, formée en bobinant une bande de revêtement sur la première enveloppe (qui joue alors le rôle de mandrin), le matériau de la bande de revêtement bobiné étant le matériau thermoplastique renforcé par les fibres. La paroi étanche résultante du réservoir étanche comprend ainsi deux constituants (l'enveloppe interne, l'enveloppe externe).

Comme l'enveloppe interne étanche faite à partir de la bande bobinée de matériau thermoplastique est beaucoup plus légère et, aussi, moins coûteuse qu'un liner (métallique mais aussi en polymère), son utilisation permet d'alléger considérablement la masse du réservoir et de diminuer son coût.

Cet avantage est toutefois pondéré par l'augmentation du temps de fabrication du réservoir étanche, puisque le bobinage de la bande de revêtement lors de la fabrication de l'enveloppe interne étanche prend beaucoup de temps. En effet la bande de revêtement, étant étroite et peu épaisse en comparaison des dimensions du gabarit et de l'épaisseur souhaitée de l'enveloppe interne étanche, doit être bobinée par de multiples tours autour du gabarit. Précisément, la bande de revêtement est bobinée pour former une pluralité de spires superposées se chevauchant longitudinalement et radialement, formant ainsi plusieurs couches autour du gabarit. De plus, la vitesse de bobinage est contrainte par l'étirement et la pression à appliquer à la bande de revêtement pour que la première couche soit bien serrée sur le gabarit et que les couches successives soient serrées entre elles. Cela permet d'éviter des bulles d'air entre chaque spire et couche lors de l'étape de chauffage qui permet de fusionner ou de ramollir les spires entre elles afin de les consolider.

Par exemple, il faut plusieurs heures pour bobiner une bande de 120 µm à 150 µm d'épaisseur et de 25 mm à 80 mm de largeur autour d'un gabarit cylindrique de 60 cm de diamètre et de 3,50 m de longueur, sur une épaisseur comprise entre 2 mm et 5 mm. Une telle durée entrave le déploiement du procédé de fabrication à l'échelle industrielle.

Il existe donc un besoin d'accélérer la fabrication d'un réservoir étanche, en particulier d'un réservoir étanche ne comportant pas de liner interne.

### RESUME DE L'INVENTION

L'invention offre une solution aux problèmes évoqués précédemment, en permettant d'obtenir une paroi étanche en une seule étape de bobinage d'un matériau fibré.

Un premier aspect de l'invention concerne un procédé de fabrication d'une paroi étanche d'un réservoir étanche, le réservoir étanche étant adapté pour contenir un gaz et/ou un liquide, le procédé de fabrication comprenant les étapes suivantes :
- Monter un mandrin réutilisable et amovible par montage/démontage d'arceaux, le mandrin présentant une surface externe de forme correspondant à une surface interne de la paroi étanche du réservoir,
- Former la paroi étanche du réservoir sur la surface externe du mandrin, en formant un orifice d'extraction du mandrin,
- Retirer le mandrin hors de la paroi étanche par l'orifice d'extraction,
L'étape pour former la paroi étanche étant effectuée en accomplissant les sous-étapes suivantes de :
- Formation d'une enveloppe par application d'au moins un tricot recouvrant la surface externe du mandrin, le tricot comportant une couche de fils tricotés formant des boucles, les fils tricotés étant d'un matériau thermoplastique colmatable par apport de chaleur,
- Bobinage, autour de l'enveloppe formée par le tricot recouvrant la surface externe du mandrin, de sections successives d'une première bande comprenant un matériau thermoplastique colmatable par apport de chaleur et renforcé de fibres, de sorte que les sections successives de première bande bobinées se recouvrent pour former une première couche de première bande et se recouvrent pour former des couches superposées de première bande, le bobinage étant effectué en :
   - Exerçant une pression choisie pour serrer chaque section de la première bande bobinée contre l'enveloppe, formant la première couche de première bande, et pour serrer les sections recouvrant la première couche de première bande pour former les autres couches superposées de première bande, et en
   - Exerçant une température choisie pour fusionner le matériau thermoplastique de chaque section de la première couche de première bande avec les fils sous-jacents de l'enveloppe, et pour fusionner les sections des couches successives de première bande,
- Refroidissement de l'enveloppe et de la première bande bobinée pour former la paroi étanche en une seule matière.

Ainsi, l'utilisation liminaire d'un tricot dont les fils/boucles sont d'un matériau thermoplastique compatible avec le matériau thermoplastique de la première bande (les deux constituants fusionnent sous l'effet combiné de la pression et de la température exercée pendant le bobinage) permet avantageusement de s'affranchir d'une étape, très consommatrice en temps, de bobinage d'une bande de matériau thermoplastique autour du mandrin. Le procédé de fabrication de la paroi étanche d'un réservoir étanche est ainsi plus rapide que la solution proposée par le document de l'art antérieur.

En effet, un seul tricot (ou une seule couche de fils tricotés) apporte suffisamment de matière thermoplastique pour créer, en fusionnant avec la première bande, un effet barrière au gaz de même tenue mécanique à la pression que l'enveloppe interne étanche du réservoir selon l'art antérieur. Comme le tricot est fabriqué au préalable, il n'a pas à être formé pendant le processus de fabrication du réservoir, contrairement à l'enveloppe interne étanche du réservoir selon l'art antérieur. Le tricot est en outre aisé et rapide à appliquer sur le mandrin puisqu'il peut y être simplement enfilé, par exemple manuellement.

De plus, grâce aux fils/boucles du tricot qui sont d'un matériau thermoplastique compatible avec le matériau thermoplastique de la première bande, la paroi étanche obtenue est monolithique, c'est-à-dire formée d'une seule matière. Dit autrement, on ne peut pas, une fois le bobinage par la première bande achevé, distinguer les constituants utilisés (les fils tricotés et le matériau thermoplastique imprégnant les fibres de renfort). Cette homogénéité de la paroi étanche permet, par rapport à une paroi étanche composée de deux enveloppes interne et externe (telles que celles présentes dans les solutions de l'art antérieur), d'améliorer la robustesse du réservoir.

Précisément, la paroi étanche du réservoir monolithique résiste mieux qu'une paroi à double couche lorsqu'un vide ou une dépressurisation sont appliquées à l'intérieur du réservoir étanche. Comme ces conditions de pression et de température sont celles rencontrées lors des phases de séchage et décontamination du réservoir, ou lors des phases de vidange, le réservoir étanche obtenu est mieux adapté à son usage et présente une durée de vie plus longue.

Outre les caractéristiques qui viennent d'être évoquées dans les paragraphes précédents, le procédé selon le premier aspect de l'invention peut présenter une ou plusieurs caractéristiques complémentaires parmi les suivantes, considérées individuellement ou selon toutes les combinaisons techniquement possibles.
- le matériau thermoplastique des fils tricotés est identique au matériau thermoplastique de la première bande.
- le tricot présente une masse par surface comprise entre 100 g/m² et 800 g/m².
- le tricot se présente sous la forme d'un ou plusieurs manchons, chaque manchon étant enfilé par une extrémité du mandrin.
- la sous-étape de formation de l'enveloppe comprend en outre l'application d'un deuxième tricot sur le premier tricot, le matériau thermoplastique des fils tricotés du deuxième tricot étant colmatable par apport de chaleur dans les mêmes conditions de température et de pression que le matériau thermoplastique des fils tricotés du premier tricot sous-jacent.
- la sous étape de bobinage autour de l'enveloppe comprend le bobinage d'au moins une autre bande additionnelle, formée du matériau de la première bande, la bande additionnelle étant bobinée simultanément avec la première bande.

Un deuxième aspect de l'invention concerne un procédé de réalisation d'une paroi étanche renforcée d'un réservoir comprenant les étapes du procédé de la paroi étanche décrite précédemment avec ou sans les différents modes de mise en oeuvre, comprenant les sous-étapes suivantes :
- Bobinage, autour de la paroi étanche, de sections successives d'une deuxième bande comprenant un matériau thermoplastique colmatable par chaleur renforcé de fibres, de sorte que les sections successives de deuxième bande bobinées se recouvrent pour former une première couche de deuxième bande et se recouvre pour former des couches superposées de deuxième bande, le bobinage étant effectué en :
   - Exerçant une pression choisie pour serrer chaque section de la deuxième bande bobinée contre la paroi étanche, formant la première couche de deuxième bande, et pour serrer les sections recouvrant la première couche de deuxième bande pour former les autres couches superposées de deuxième bande, et en
   - Exerçant une température choisie pour fusionner le matériau thermoplastique de chaque section de la première couche de deuxième bande avec la région sous-jacente de la paroi étanche, et pour fusionner les sections des couches successives de deuxième bande,
- Refroidissement de la paroi étanche et de la deuxième bande pour former la paroi étanche renforcée en une seule matière.

Ainsi, la paroi étanche du réservoir est renforcée en fibres et en matériaux thermoplastique. Cela permet d'augmenter l'étanchéité et la résistance mécanique à la pression du réservoir.

Avantageusement, le matériau thermoplastique des fils tricotés du tricot est identique au matériau thermoplastique de la première bande.

Ainsi, l'enveloppe et la deuxième bande bobinée sont unifiées de la manière la plus parfaite possible.

Un troisième aspect de l'invention concerne un procédé de fabrication d'un réservoir étanche pour contenir un gaz ou un liquide, comprenant les étapes suivantes
- Fabriquer une paroi étanche du réservoir en accomplissant les étapes du procédé de fabrication selon le premier aspect de l'invention, avec ou sans les différents modes de réalisation décrits précédemment,
- Fermer la paroi étanche en appliquant une embase contre la paroi étanche,
- Consolider la paroi étanche pour obtenir une paroi étanche renforcée du réservoir,
L'étape pour consolider la paroi étanche étant accomplie en effectuant les sous-étapes suivantes de :
- Bobinage, autour la paroi étanche, de sections successives d'une deuxième bande comprenant un matériau thermoplastique colmatable par chaleur renforcé de fibres, de sorte que les sections successives de deuxième bande bobinées se recouvrent pour former une première couche de deuxième bande et se recouvrent pour former des couches superposées de deuxième bande, le bobinage étant effectué en :
- Exerçant une pression choisie pour serrer chaque section de la deuxième bande bobinée contre la paroi étanche, formant la première couche de deuxième bande, et pour serrer les sections recouvrant la première couche de deuxième bande pour former les autres couches superposées de deuxième bande, et en
- Exerçant une température choisie pour fusionner le matériau thermoplastique de chaque section de la première couche de deuxième bande avec la région sous-jacente de la paroi étanche, et pour fusionner les sections des couches successives de deuxième bande,

- Refroidissement de la paroi étanche et de la deuxième bande pour former la paroi étanche renforcée en une seule matière.

Le matériau thermoplastique de la deuxième bande est donc chimiquement compatible avec la région sous-jacente de la paroi étanche pour fusionner ensemble.

Selon un mode de réalisation, les matériaux thermoplastiques de la première et de la deuxième bande sont identiques.

Selon un mode de réalisation, l'embase présente une surface périphérique externe recouverte d'un matériau thermoplastique colmatable par chaleur et compatible avec le matériau thermoplastique de la paroi étanche. Selon un exemple, la surface périphérique de l'embase est chauffée avant l'étape de fermeture pour fusionner avec une surface périphérique interne de la paroi étanche définissant l'orifice d'extraction pendant l'étape de fermeture de la paroi étanche.

Selon un mode de réalisation, la surface externe de l'embase est recouverte par la deuxième bande lors de ladite étape de consolidation de la paroi étanche.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 représente, sous forme de logigramme, les principales étapes d'un procédé de fabrication d'un réservoir étanche selon un aspect de l'invention ;
- La figure 2 est une représentation schématique en vue de coupe d'un réservoir étanche obtenu selon le procédé de fabrication représenté sur la figure 1 ;
- La figure 3 représente, sous forme de logigramme, les principales étapes du procédé de fabrication d'une paroi étanche, première étape du procédé de fabrication représenté sur la figure 1 ;
- La figure 4 représente, sous forme schématique, un exemple de mandrin mis en oeuvre lors du procédé de fabrication représenté sur la figure 3 ;
- La figure 5 représente, sous forme de logigramme, la deuxième étape du procédé de fabrication représenté sur la figure 3,
- La figure 6 représente, sous forme schématique, un exemple de tricot mis en oeuvre lors l'étape représentée sur la figure 5 ;
- La figure 7 représente, sous forme schématique, une paroi étanche semi finie en cours de fabrication lors de la première sous-étape de l'étape représentée sur la figure 5 ;
- La figure 8 représente, sous forme schématique, la deuxième sous-étape de l'étape représentée sur la figure 5 ;
- La figure 9 représente, sous forme schématique, un bloc formant la paroi étanche entourant un mandrin lors de la troisième sous-étape de l'étape représentée sur la figure 5 ;
- La figure 10 représente, sous forme schématique, une paroi étanche obtenue après la troisième étape du procédé de fabrication représenté sur la figure 3 ;
- La figure 11 représente, sous forme schématique, un réservoir semi fini lors de la deuxième étape du procédé de fabrication représenté sur la figure 1 ;
- La figure 12 représente, sous forme de logigramme, des sous-étapes de la troisième étape du procédé de fabrication représenté en figure 1,
- La figure 13 représente, sous forme schématique, la première sous-étape de l'étape représentée sur la figure 11 ;
- La figure 14 représente, sous forme schématique, une sous-étape alternative à la première sous-étape représentée sur la figure 13 ;
- La figure 15 représente, sous forme schématique, un réservoir obtenu après la deuxième sous-étape de l'étape représentée sur la figure 12.

### DESCRIPTION DETAILLEE

Sauf précision contraire, un même élément apparaissant sur des figures différentes présente une référence unique.

La présente invention se place dans le contexte des réservoirs étanches et de leurs procédés de fabrication. Plus particulièrement, l'invention vise à produire de manière plus rapide des réservoirs étanches présentant une résistance à la pression supérieure à 0,2 MPa et des caractéristiques de barrière au gaz (imperméabilité au gaz/ou au liquide à contenir dans le réservoir étanche) similaires, voire meilleures, que celles des solutions de l'art antérieur.

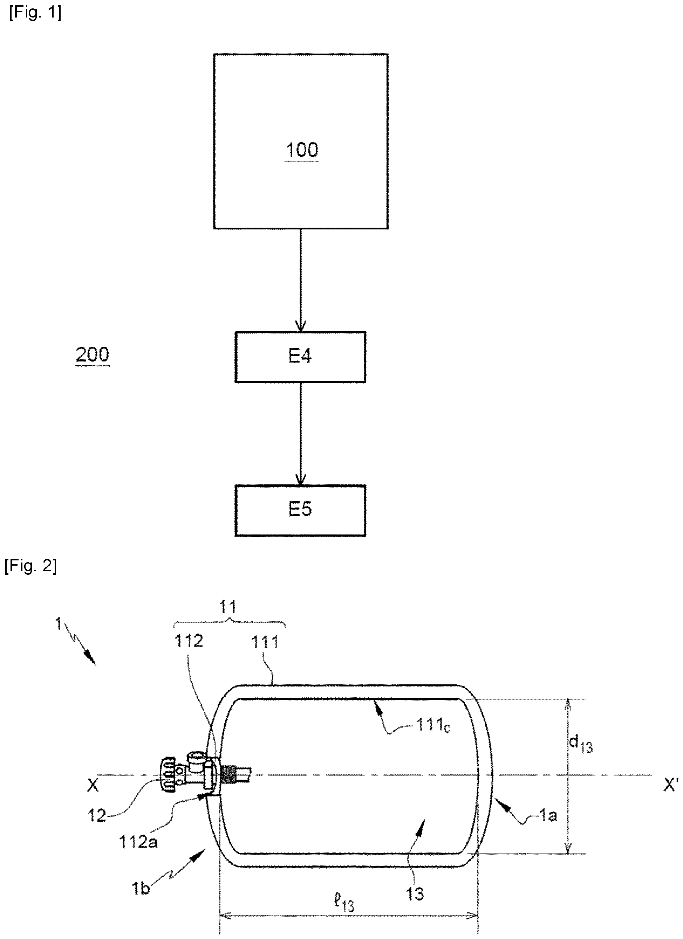

Un exemple de mise en oeuvre d'un procédé de fabrication 200 d'un réservoir étanche conforme à l'invention est illustré sous forme de logigramme sur la figure 1.

Le procédé 200 de fabrication d'un réservoir étanche est préférentiellement utilisé pour produire le réservoir étanche 1 (aussi noté « réservoir 1 » par la suite) dont un agrandissement d'une coupe est représenté schématiquement sur la figure 2.

En particulier, le réservoir 1 est un réservoir composite adapté à un usage dans le domaine du transport et de la livraison d'hydrogène sous haute pression.

L'expression « réservoir composite » désigne un type de réservoir dans lequel la fonction d'étanchéité au gaz est réalisée par un matériau thermodurcissable et la fonction de résistance mécanique à la pression est réalisée par des renforts fibrés. Le réservoir 1 est ainsi ici destiné à contenir de l'hydrogène maintenu sous une pression élevée, égale ou supérieure à 700 MPa. Le réservoir est en outre ici adapté à contenir un liquide tel que de l'eau. Naturellement, dans d'autres exemples, le réservoir 1 peut être destiné à contenir d'autres gaz et/ou d'autres liquides, dans des conditions de stockage atmosphériques ou sous des pressions inférieures à 700 MPa.

Comme le montre la figure 2, le réservoir étanche 1 présente ici une forme intérieure et extérieure cylindrique, selon dans cet exemple un même axe longitudinal XX'. La forme extérieure et la forme intérieure peuvent avoir un axe décalé l'un par rapport à l'autre par exemple parallèle l'un à l'autre. Le réservoir 1 comprend un flanc de chaque côté axial 1a, 1b, appelée facette frontale qui est arrondie, en forme de dôme ou de calotte. Dans d'autres exemples, la forme du réservoir 1 peut être différente, par exemple sphérique, ellipsoïdale ou d'autres formes.

Dans la description qui suit, les termes « intérieur », « extérieur », « interne » et « externe » sont utilisés pour désigner la position d'une pièce ou d'une surface par rapport à l'axe longitudinal XX' du réservoir 1, une surface intérieure ou interne (par exemple) étant plus proche de l'axe longitudinal qu'une surface extérieure ou externe. Le terme « axial » signifie « suivant la direction de l'axe longitudinal » et les termes « radial » et « transversal » signifient « suivant une direction perpendiculaire à l'axe longitudinal ». Le terme « latéral » signifie « qui est situé sur les côtés d'une pièce s'étendant radialement ». Les termes « épaisseur » et « diamètre » désignent des dimensions mesurées radialement. Le terme « longueur » désigne une dimension mesurée axialement.

Plus précisément, et toujours en référence à la figure 2, le réservoir 1 comporte une paroi 11 et un volume intérieur 13. Dans cet exemple le réservoir 1 comprend un embout 12.

Le volume intérieur 13 du réservoir 1 peut présenter dans cet exemple un diamètre d₁₃ de 60 cm et une longueur l₁₃ de 3,50 m.

L'embout 12 du réservoir 1 est par exemple un robinet 12 permettant alternativement de fermer/ouvrir le passage du gaz ou du liquide dans/hors du réservoir 1.

La paroi 11 du réservoir 1 présente une paroi étanche 111 et, dans cet exemple, une embase 112 positionnée sur l'un des côtés axiaux 1b du réservoir 1.

La paroi étanche 111 de la paroi 11 du réservoir 1 présente une surface interne 111c qui a la forme du volume intérieur 13 du réservoir 1.

La paroi étanche 111 est formée d'un matériau composite, c'est-à-dire qu'elle comprend, un mélange d'au moins un matériau thermoplastique et au moins un matériau fibreux. La paroi étanche 111 réalise à la fois l'effet barrière interne (l'imperméabilité) au gaz ou au liquide contenu dans le volume intérieur 13 du réservoir 1 et l'effet de résistance mécanique à la pression. Le ou les matériaux thermoplastiques, ainsi que le type de fibres de la paroi étanche 111 seront décrits ultérieurement, en relation avec le procédé 100 de fabrication du réservoir 1.

L'embase 112 de la paroi 11 du réservoir 1 est de préférence de forme annulaire, c'est-à-dire qu'elle présente un passage intérieur adapté à recevoir l'embout (le robinet) 12.

Dans l'exemple du réservoir 1 illustré sur la figure 2, l'embase 112 présente avantageusement une surface externe courbée 112a dont la périphérie, au moins, est positionnée dans l'épaisseur de la paroi étanche 111 (non visibles sur la figure 2) comme expliquée dans la suite. Ainsi, la paroi étanche 111 et l'embase 112 formant le réservoir 1, forment une structure rigide unitaire capable de résister aux pressions exigées par l'application.

Le procédé 200 de fabrication du réservoir 1 est décrit ci-après en relation avec les figures 1 à 15.

Comme le montre la figure 1, le procédé 200 de fabrication du réservoir 1 comprend les étapes successives suivantes :
- Fabriquer la paroi étanche 111 de la paroi 11 du réservoir 1 selon un procédé de fabrication noté 100 conforme à un autre aspect de l'invention,
- Fermer E4 la paroi étanche 111 en appliquant l'embase contre la paroi étanche.

En outre optionnellement le procédé 200 comprend en outre une étape suivante :
- Consolider E5 la paroi étanche 111 pour obtenir une paroi étanche renforcée.

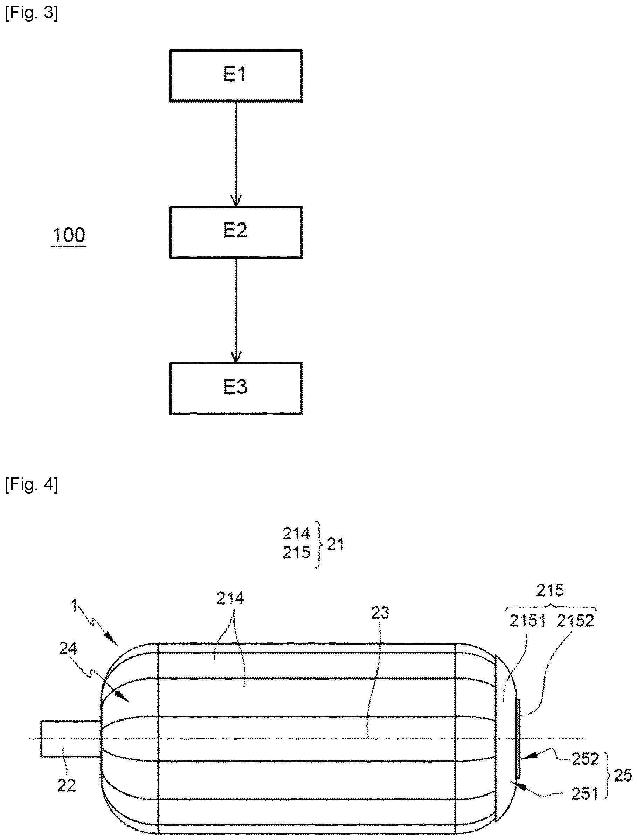

Le procédé de fabrication 100 de la paroi étanche 111 est décrit ci-après en relation avec les figures 3 à 10.

En référence à la figure 3, le procédé 100 de fabrication de la paroi étanche 111 comprend les étapes suivantes :
- Monter E1 un mandrin 2 réutilisable et amovible par montage/démontage d'arceaux 24, le mandrin 2 présentant une surface externe de forme correspondant à la surface interne 111c de la paroi étanche 111 de la paroi 11 du réservoir 1,
- Former E2 la paroi étanche 111 de la paroi 11 du réservoir 1 sur la surface externe du mandrin 2, en formant un orifice d'extraction 111d du mandrin 2,
- Retirer E3 le mandrin 2 hors de la paroi étanche 111 par l'orifice d'extraction 111d.

La figure 4 illustre, sous forme schématique, un exemple de mandrin 2 monté, utilisé dans le procédé 100. Ce mandrin 2 est inspiré du document WO2011143723A2.

Le mandrin 2 joue le rôle d'un moule intérieur de la paroi étanche 111.

Le mandrin 2 convient à l'enroulement filamentaire. En effet, comme il sera décrit plus loin, l'étape E3 du procédé 100 met en oeuvre un tel procédé d'enroulement filamentaire autour du mandrin 2.

Comme le montre la figure 4, le mandrin 2 est ici une pièce de révolution creuse, présentant un axe de révolution 23.

Le mandrin 2 comporte dans cet exemple à une extrémité une broche 22 amovible (ou raccord) disposée à une extrémité axiale du mandrin 2. Cette broche 22 du mandrin 2 est dans cet exemple adaptée pour être couplée à un moteur rotatif, permettant de mettre en rotation le mandrin 2 autour de son axe de révolution 23.

Le mandrin 2 comporte en outre une surface externe 21 amovible, solidaire de la broche 22 (une fois le montage du mandrin 2 achevé).

La surface externe 21 du mandrin 2 présente une forme arrondie correspondant à la forme (et aux dimensions) de la surface intérieure 111c de la paroi étanche 111 de la paroi 11 du réservoir 1 (cf. figure 2). Ainsi, selon l'exemple du réservoir 1 détaillé précédemment, le mandrin 2 présente ici une surface externe 21 dont le plus grand diamètre est 60 cm et la longueur 3,50 m.

Le mandrin 2 comprend une pluralité d'arceaux 24 et dans cet exemple un fond 25. Le fond 25 comprend en l'occurrence une embase 251 et un bouchon 252 positionné dans l'embase 251 mais peut être formé en une seule pièce. La surface externe de mandrin 21 comprend chaque surface externe 214 allongé axialement de chaque arceau 24, et une surface externe 215 du fond 25 disposé à l'opposé de la broche 22 du mandrin 2. La surface externe 215 du fond 25 comprend dans cet exemple une surface externe d'embase 2151 et une surface externe de bouchon 2152. Chaque arceau24 est maintenu en position par ses extrémités opposées, l'une étant fixé sur la circonférence 22a de la broche 22, et l'autre étant engagée dans l'embase 251 du fond 25. Les arceaux 24 peuvent aussi selon un autre exemple s'emboiter les uns dans les autres.

Le montage E1 du mandrin 2 s'effectue, par exemple, en couplant d'abord la broche 22 sur l'outillage rotatif, puis en engageant une extrémité de chaque arceau 24 dans la broche 22, et enfin en fixant les extrémités opposées des arceaux 24 avec le fond 25 du mandrin 2.

Naturellement, d'autres configurations du mandrin 2 sont possibles (non représentées par les figures).

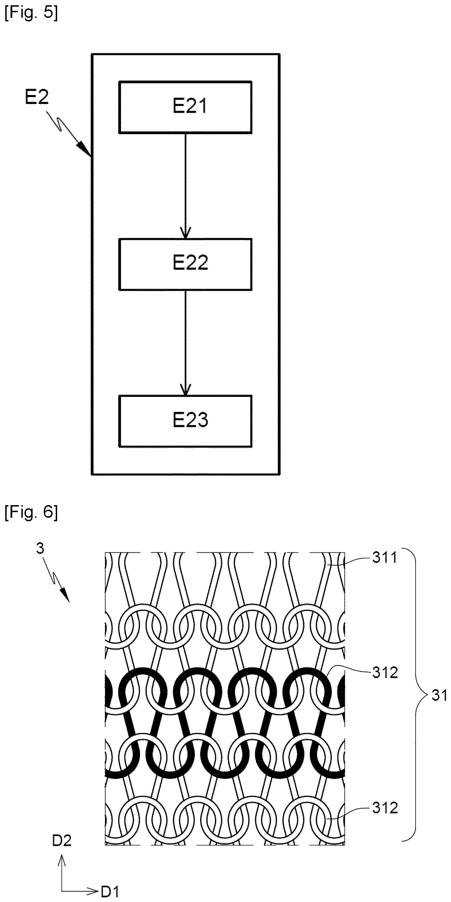

La figure 5 représente, sous forme de logigramme, l'étape E2 du procédé 100. Cette étape E2 vise, comme décrit précédemment, à former la paroi étanche 111 de la paroi 11 du réservoir 1.

Comme le montre la figure 5, l'étape E2 débute à la sous-étape E21. Lors de cette sous-étape E21, un tricot 3 est appliqué sur le mandrin 2, en recouvrant la surface externe 21 du mandrin 2.

La figure 6 représente, sous forme schématique, une vue partielle d'un exemple de tricot 3.

Comme le montre la figure 6, le tricot 3 comprend une couche 31 de fils tricotés 311,312 formant des boucles. Le tricot 3 est ainsi une structure qui peut être formée de boucles ou mailles passées les unes dans les autres. Par exemple les boucles ou mailles sont formées de « pieds et têtes entremêlés ». Le tricot 3 forme ainsi une étoffe dont les mailles peuvent être étirées dans diverses directions ayant plus d'élasticité qu'un tissage.

Les fils tricotés 311, 312 sont formés du ou de l'un des matériaux thermoplastiques colmatable par chaleur de la paroi étanche 111 (notons que le colmatage n'est pas effectué lors de la sous-étape E21).

Le ou les matériaux thermoplastiques du tricot 3 sont par exemple choisis parmi (mais non limités aux) matériaux thermoplastiques de la famille des polyoléfines ou de la famille des polyamides.

Les fils tricotés 311,312 peuvent ainsi être en nylon. Dans ce cas notamment, le diamètre des fils tricotés 311, 312 peut être compris entre 0,5 mm et 1 mm.

Les fils tricotés 311, 312 forment préférentiellement des boucles orientées suivant une première direction D1 et une deuxième direction D2 orthogonales à la première direction D1. L'épaisseur des fils tricotés 311, 312 et/ou la géométrie du tricot, sont déterminées pour que la masse par surface du tricot 3, une fois appliqué sur la surface externe 21 du mandrin 2, soit comprise entre 100 g/m² et 800 g/m².

Ainsi, à l'issue de la sous-étape E21, les fils tricotés 311, 312 du tricot 3 forment une enveloppe 30 de fils tricotés conformée selon le pourtour de la surface externe 21 du mandrin 2. Autrement dit, l'enveloppe 30 de fils tricotés présente la forme de la circonférence (des limites extérieures) de la surface externe 21 du mandrin 2 et est posée au contact de cette surface externe 21. Dit autrement encore, l'enveloppe 30 forme un filet posé à plat, ou drapant, la surface externe 21 du mandrin 2.

Cette enveloppe 30 de fils tricotés fournit une première partie du ou des matériaux thermoplastiques de la paroi étanche 111. Comme décrit précédemment, ce ou ces matériaux thermoplastiques sont nécessaires pour réaliser l'effet barrière (l'imperméabilité) au gaz ou au liquide à contenir dans le volume intérieur 13 du réservoir 1.

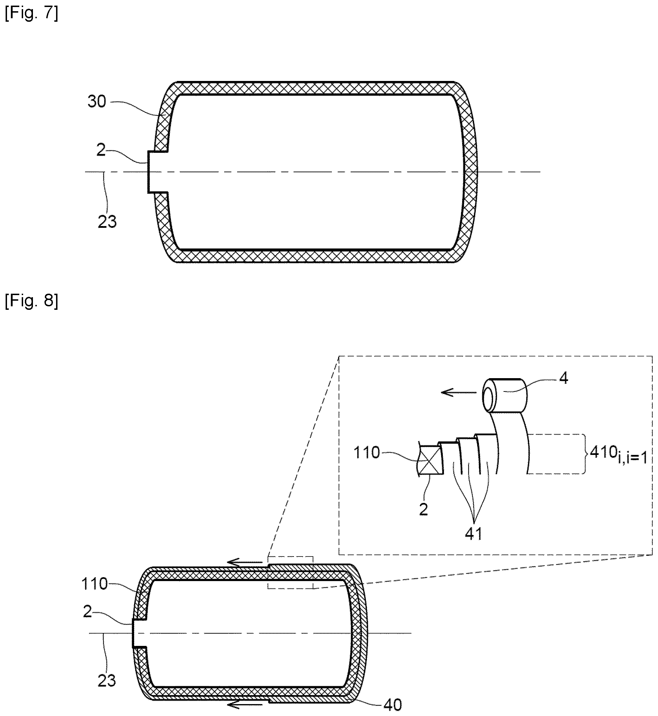

La figure 7 représente le mandrin 2 obtenu à l'issue de l'étape E21, ce mandrin étant, en l'occurrence, recouvert de l'enveloppe 30 de fils tricotés.

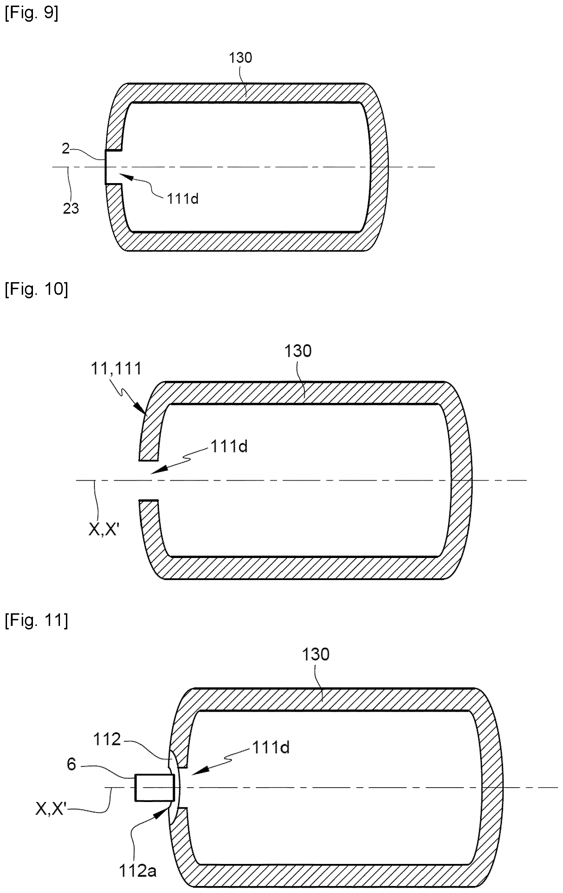

Comme on le voit sur la figure 7, l'enveloppe 30 ne recouvre pas la broche 22 du mandrin 22. Ainsi, lorsque la broche 22 sera retirée, lors de l'étape E3 du procédé 100, il subsistera un orifice (correspondant à la section transversale de la broche 22), noté « orifice 111d d'extraction du mandrin 2 » par la suite (cf. figure 10), par lequel les arceaux 24, et le fond 25 du mandrin 2 pourront être extraits depuis l'intérieur de la paroi étanche 111. La broche 22 (et donc l'orifice d'extraction 111d) sont pour cela dimensionnés en fonction des arceaux 24 et de l'embase 25 et le bouchon 26, pour que ceux-ci puissent être extraits.

En tout état de cause, une partie du mandrin 2 n'est pas recouvert par l'enveloppe 30 pour former l'orifice d'extraction 111d. Selon un autre exemple non représenté, l'enveloppe 30 ne recouvre pas la surface externe 2152 du bouchon 252, permettant de le retirer et forme l'orifice d'extraction 111d ou un deuxième orifice d'extraction. Dans cet exemple, la broche 22 peut être uniquement un axe interne et être recouvert par 30 et être retiré par l'orifice d'extraction 111d lorsque le bouchon est retiré. Le bouchon 252 peut dans ce cas servir de support et maintien du mandrin 2, par exemple en ayant l'axe 23 vertical, pendant le procédé de fabrication de la paroi étanche.

En pratique, le tricot 3 est fabriqué préalablement à l'exécution du procédé 100 de fabrication du réservoir étanche 1.

Il se présente avantageusement sous la forme d'un ou plusieurs manchons (ou chaussettes) (non représentés par les figures). Ces manchons sont étirables et rétractables, du fait qu'ils ne sont faits que des fils 311,312 tricotés.

Le manchon est alors appliqué sur le mandrin 2, par exemple par un opérateur, de la manière suivante : le manchon est enfilé sur le mandrin 2 par l'une des extrémités du mandrin 2, en l'occurrence par la broche 22 du mandrin 2, ou par le fond 212 de la surface externe 21 du mandrin 2. Le manchon s'étire au moment d'être enfilé puis, une fois enfilé et relâché, il se rétracte sur la surface externe du mandrin. De la sorte, le tricot 3 est déposé à plat sur la surface externe 21 du mandrin.

Plusieurs manchons sont avantageusement utilisés lorsque les dimensions du mandrin sont grandes (par exemple lorsque sa longueur est supérieure à 1 m).

Dans d'autres cas, on utilise plusieurs manchons spécifiquement adaptés pour se conformer aux différentes formes (diamètres) de la surface externe 21 du mandrin 2. Ainsi, un manchon peut être utilisé pour recouvrir la ou une partie de la surface externe 214 des arceaux 24 et un autre manchon peut être utilisé pour recouvrir la surface externe 215 du fond et optionnellement une ou l'autre partie de la surface externe 214 des arceaux 24. Les manchons peuvent être appliqués côte à côte, ou se chevaucher axialement.

En tout état de cause, quel que soit le nombre de manchons, et quelle que soit la dimension du mandrin (en particulier sa longueur), l'étape E21 d'application du tricot 3 est particulièrement rapide et aisée à exécuter. Par exemple, il faut, pour un opérateur formé, 10 minutes pour former l'enveloppe 30 autour du mandrin 2. Dit autrement, une partie du ou des matériaux thermoplastiques de la paroi étanche 111 est apposée de manière simple et rapide sur le mandrin.

En variante, un autre tricot (non représenté par les figures) peut être appliqué sur le tricot 3 précédemment décrit. Ce tricot est noté « deuxième tricot » par la suite, tandis que le tricot déposé préalablement est noté « premier tricot ». L'enveloppe 30 est alors constituée des deux (premier et deuxième) tricots superposés. Cela permet d'augmenter la quantité de matériau thermoplastique de l'enveloppe 30 de fils tricotés. Cette variante est particulièrement bien adaptée pour augmenter la perméabilité (effet barrière au gaz) de la paroi étanche 111.

A présent qu'une partie des matériaux thermoplastiques a été apposée (via l'enveloppe 30) sur la surface externe 21 du mandrin 2, il s'agit d'apporter l'autre partie des matériaux thermoplastiques, ainsi que les fibres nécessaires à la réalisation de l'effet barrière au gaz. Cet apport est réalisé lors de la sous-étape E22 décrite ci-après, en relation avec la figure 8.

Lors de cette sous-étape E22, comme le montre la figure 8, et en particulier à l'insert présent sur cette figure 8, des sections successives 41 d'une première bande 4 de matériau thermoplastique colmatable par chaleur et renforcé avec des fibres sont bobinées (enroulées) autour de l'enveloppe 30 de fils tricotés.

Dit autrement, on réalise, lors de cette sous-étape E22, un procédé d'enroulement filamentaire de la première bande 4 sur l'enveloppe 30 pour recouvrir l'enveloppe 30 de fibres et de matériau thermoplastique.

Les fibres de la première bande 4 sont préférentiellement continues. Cela permet d'obtenir une structure de renfort plus performante et ainsi d'augmenter la résistance mécanique à la pression de la paroi étanche 111 résultante.

Les fibres de la première bande 4 sont formées d'un matériau choisi parmi (mais non limité à) les matériaux suivants : verre, carbone, métal, minérale, laine, coton, lin, polyester, polypropylène, polyamide, basalte, kevlar^{®}, thermoplastique étiré ou un mélange de deux ou plusieurs de ces matériaux.

Le matériau thermoplastique de cette première bande 4 est compatible chimiquement avec le matériau thermoplastique des fils 311,312 tricotés. L'expression « compatible chimiquement » signifie que les matériaux thermoplastiques du tricot 3 et de la première bande 4 présentent des points de fusion et/ou de ramollissement situés dans des plages de température identiques ou voisines.

Le matériau thermoplastique colmatable par apport de chaleur de la première bande 4 peut être identique à celui des fils 311, 312 tricotés. Par exemple, le matériau thermoplastique de la première bande et celui des fils tricotés peuvent tous deux être de la famille des polyoléfines ou encore de la famille des polyamides.

L'effet produit par cette compatibilité des matériaux thermoplastiques de la première bande 4 et des fils tricotés 3 sera décrit ultérieurement, en relation avec la sous-étape E23.

La première bande 4 présente de préférence une largeur supérieure ou égale à 20 cm, par exemple égale à 20 cm, 50 cm ou plus. Cela permet de rendre l'exécution de la sous-étape E22 plus rapide que lorsque la première bande présente une largeur plus petite.

Naturellement, une première bande 4 de largeur inférieure à 20 cm convient au procédé 100, par exemple une largeur de première bande 4 égale à 2 cm, ou 4 cm, ou encore 14 cm convient.

En pratique, le mandrin 2 est mis en rotation via en l'occurrence dans cet exemple la broche 22 durant l'exécution de la sous-étape E22. Selon un autre exemple, le mandrin 2 et l'enveloppe 30 sont immobiles et une bobineuse tourne autour du mandrin 2 pour l'enroulement filamentaire de la première bande 4 sur l'enveloppe 30 pour recouvrir l'enveloppe 30 de fibres et de matériau thermoplastique. La bande 4 est, comme expliqué dans la suite, enroulée en étant serrée sur l'enveloppe 30, exerçant une pression entre la bande 4 et l'enveloppe 30 lors de l'enroulement filamentaire à une température dans une plage de température prédéterminée pour que la bande 4 fusionne ou s'unifie avec l'enveloppe 30.

Comme l'illustre de manière schématique l'insert de la figure 8, les sections successives 41 de la première bande 4 bobinées se recouvrent pour former une première couche 410₁ de première bande 4, et se recouvrent pour former des couches superposées 40 de première bande 4 (sur l'insert de la figure 8, une deuxième couche superposée à la première couche 410i, i=1 s'apprête à être formée, selon la direction axiale de la flèche). Le nombre n1 de couches superposées de cette première bande 4 dépend du diamètre et de la forme géométrique du mandrin 2 (donc du diamètre et de la forme du volume intérieur 13 souhaités pour le réservoir 1), ainsi que de la pression d'éclatement souhaitée (c'est-à-dire de la pression au-delà de laquelle le réservoir 1 ne tient plus la pression et se déforme). Le nombre n1 de couches peut être compris entre n1=2 et plusieurs centaines, par exemple n1=200. L'enroulement multicouches permet de diminuer la perméabilité et d'augmenter la tenue mécanique à la pression de la paroi étanche 111 résultante 1.

L'épaisseur de chaque couche 410i, i= 1 à n peut être, par exemple, comprise entre 50 µm et 300 µm. Au sein de chaque couche 410i, i =1 à n, les sections successives 41 de première bande se chevauchent sur une distance comprise entre 0 (correspondant à aucun recouvrement) et la moitié de la largeur de la première bande 4 et selon des angles de recouvrement qui peuvent varier.

Durant le bobinage de la première bande 4, une pression et un chauffage sont exercés sur chaque section 41 bobinée successive de la première bande 4.

La pression exercée sur chaque section 41 de première bande bobinée est déterminée pour 1) lors de la formation de la première couche 410i, i= 1, serrer cette section 41 contre l'enveloppe 30 de fils tricotés et 2) lors de la formation des couches 410i, i= 2 à n1 superposées, pour serrer cette section 41 contre la couche 410i-1 sous-jacente de première bande 4.

La température du chauffage exercée sur chaque section 41 de première bande bobinée est déterminée en fonction des propriétés du ou des matériaux thermoplastiques utilisés (dans la première bande 4, dans l'enveloppe 30 de fils tricotés). Précisément, la température est située dans la plage de fusion des matériaux thermoplastiques utilisés (cette plage étant commune puisque les matériaux thermoplastiques sont compatibles).

Ainsi, lors de la formation de la première couche 410i, i= 1 de première bande 4, le matériau thermoplastique de chaque section 41 bobinée fusionne, ou s'unifie, avec les fils sous-jacents de l'enveloppe 30 de fils tricotés. De plus, lors de la formation des couches superposées de première bande 4, le matériau thermoplastique de chaque section 41 bobinée fusionne, ou s'unifie, avec la couche 410i-1 sous-jacente de première bande 4.

Dit Autrement, la température est choisie pour fusionner le matériau thermoplastique de chaque section de la première couche de première bande avec les fils sous-jacents de l'enveloppe de fils tricotés, et pour fusionner les sections des couches successives de première bande.

Par exemple, lorsque les matériaux thermoplastiques concernés sont de la famille des polyoléfines ou de la famille des polyamides, la température est comprise entre 160°C et 340°C.

Sous l'effet de la chaleur et du serrage, les fibres des couches 410i, i=1 à n1 de première bande 4 sont aussi réunies contre le ou les matériaux thermoplastiques (de la première bande 4, de l'enveloppe 30 de fils tricotés).

Ainsi, à l'issue de la sous-étape E22, l'enveloppe 30 et l'ensemble des couches superposées 40 de première bande sont réunies, ou consolidées, en une seule matière.

L'expression « une seule matière » est ici entendue comme présentant une homogénéité telle qu'il est impossible, à l'œil nu, de distinguer les matériaux ayant servi à la produire. Ainsi, l'expression « en une seule matière » désigne une structure monolithique qui s'oppose à une paroi étanche qui serait constituée de deux enveloppes concentriques.

En variante, la sous étape E22 est réalisée non pas avec une seule première bande 4, mais avec au moins une autre bande additionnelle, formée du matériau de la première bande, la bande additionnelle étant bobinée simultanément avec la première bande 4. Cela permet d'accélérer l'exécution de cette sous-étape E22 et ainsi, de rendre le procédé 100 de fabrication de la paroi étanche 111 plus rapide.

Le procédé 100 de fabrication de la paroi étanche 111 comprend en outre une sous-étape E23 lors de l'étape E2. Lors de cette sous-étape E23, un refroidissement de l'enveloppe 30 et de l'ensemble des couches superposées 40 de première bande est mis en oeuvre, pour les rigidifier. On obtient ainsi un bloc 130 étanche, qui est la paroi étanche 111 du réservoir 1. Ce bloc 130 est séparable du mandrin 2.

La figure 9 illustre le bloc 130, et donc la paroi étanche 111, obtenu à l'issue de la sous-étape E23. On note que ce bloc 130 (comme l'enveloppe 30 de fils tricotés) présente, l'orifice d'extraction 111d, celui-ci étant positionné à l'emplacement de la broche 22 du mandrin 2.

En référence à la figure 3, l'étape E3 du procédé 100 de fabrication de la paroi étanche 111 est mise en oeuvre après l'étape E2. Cette étape E3 est illustrée sous forme schématique sur la figure 10.

Comme le montre la figure 10, l'étape E3 consiste à démonter le mandrin 2 et à l'extraire de l'intérieur du bloc 130 par l'orifice d'extraction 111d.

En pratique, lors de l'étape E3, la broche 22 du mandrin 2 est d'abord démontée, puis les arceaux 24 sont démontés et retirés par l'orifice d'extraction 111d du bloc 130 et finalement, le fond 25 est démonté et également retiré par l'orifice d'extraction 111d.

A l'issue de l'étape E3, le bloc 130 vidé du mandrin 2, forme la paroi étanche 130, 111 du réservoir 1. Cette paroi étanche 130, 111 est ainsi en une seule matière (cf. figure 10).

La paroi étanche 130, 111 présente, grâce à la consolidation de l'enveloppe 30 de fils tricotés avec les couches 40 de première bande 4 bobinée, des propriétés d'imperméabilité et de résistance mécanique, à la pression similaires à celles du réservoir décrit dans le document WO2011143723A2, tout en étant plus rapide à produire.

En effet, pour former la couche barrière au gaz, il n'est plus nécessaire de réaliser le premier enroulement filamentaire avec le matériau thermoplastique. Cette étape, qui est longue (dans l'exemple du réservoir 1, il faut plus de trois heures), n'est plus nécessaire parce qu'elle est remplacée par la sous-étape E21 du procédé 100, qui consiste à former l'enveloppe 30 de fils tricotés.

Comme décrit précédemment, cette sous-étape E21 est rapide (10 minutes suffisent dans l'exemple du réservoir 1), parce que le tricot 3 est préalablement fabriqué, parce qu'il est très rapide et facile à appliquer sur le mandrin 2, et, enfin, parce qu'une seule couche 31 de fils tricotés suffit pour apporter la quantité de matériau thermoplastique suffisante. En effet, en adaptant les paramètres de tricotage, on obtient un grammage de tricot suffisant, permettant d'utiliser une seule couche de fils tricotés.

Outre sa rapidité d'exécution, l'unification de l'enveloppe 30 de fils tricotés avec les couches superposées 40 de première bande permet de réaliser la paroi étanche 130 en une seule matière. Cette matière homogène présente plusieurs avantages : 1) elle augmente la résistance à la pression interne de la paroi étanche 130 et 2) augmente l'imperméabilité vis-à-vis des liquides. Cela permet donc d'obtenir une paroi étanche 130 de meilleure facture et de meilleure tenue dans le temps (ou, dit autrement de durée de vie plus longue).

On note, enfin, que l'épaisseur de ce tricot 3 est inférieure à l'épaisseur d'un liner conventionnel.

A présent que la paroi étanche 130 a été fabriquée, le procédé 200 de fabrication du réservoir 1 se poursuit en mettant en oeuvre les étapes E4 et E5 (cf. figure 1).

La figure 11 illustre, sous forme schématique, l'étape E4 (deuxième étape du procédé de fabrication 200)

Comme le montre la figure 11, lors de l'étape E4, l'embase 112 de la paroi 11 du réservoir 1 (cf. figure 2) est appliquée contre le la paroi étanche 130, de manière à fermer l'orifice d'extraction 111d.

Par exemple, l'embase 112 peut être soudée contre la paroi étanche 130, en périphérie de l'orifice d'extraction 111d. Dans un autre exemple, l'embase 112 peut être emboitée dans l'orifice d'extraction 112.

Le passage intérieur de l'embase 112 est d'un diamètre réduit par rapport au diamètre de la broche 22. Dans cet exemple, ce passage intérieur est avantageusement adapté à recevoir une deuxième broche 6 (cf. figure 11) pour permettre la mise en rotation de la paroi étanche 130 autour de son axe XX'.

La périphérie externe 112a de l'embase 112 peut être avantageusement formée d'un matériau thermoplastique colmatable par chaleur et compatible avec le matériau de la paroi étanche 130 (c'est-à-dire compatible avec le matériau thermoplastique des fils tricotés et donc compatible avec le matériau thermoplastique de la première bande 4).

Par exemple, l'embase 112 peut être entièrement formée de ce matériau thermoplastique, ou seulement présenter une sur-moulure de ce matériau positionnée sur sa périphérie externe 112a (dans ce cas, le reste de l'embase peut être en métal). L'embase surmoulée peut être aisément soudée contre la paroi étanche 130.

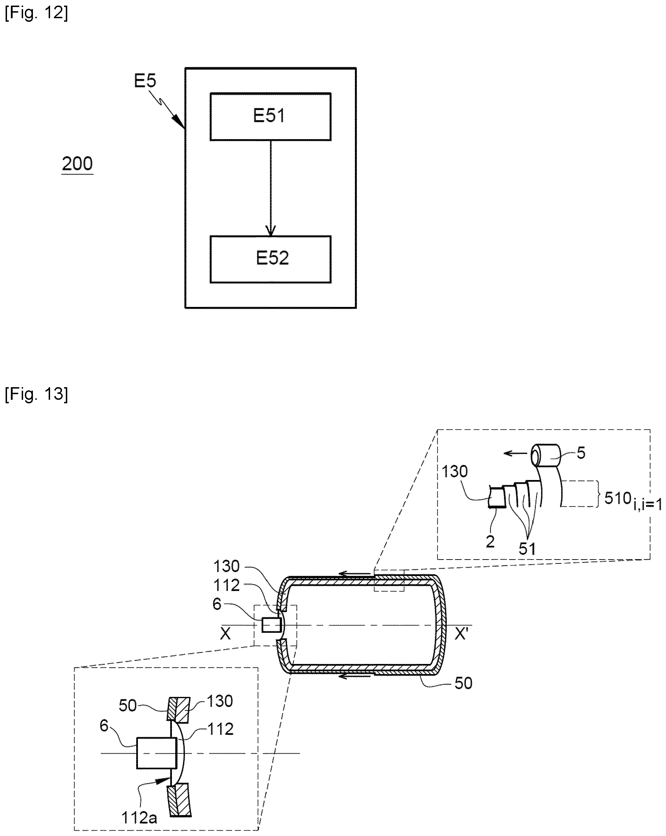

La figure 12 représente, sous forme de logigramme, l'étape E5 du procédé 200 de fabrication du réservoir étanche 1. Cette étape E5 vise à renforcer, ou consolider, la paroi étanche 130 avec un matériau fibreux pour obtenir une paroi étanche 150 renforcée, capable ainsi de résister mécaniquement à des pressions par exemple supérieures à 2 MPa. La paroi étanche 111 du réservoir 1 est, alors, la paroi étanche renforcée 150.

Comme le montre la figure 12, cette étape E5 comporte pour cela une sous-étape E51 comprenant un enroulement filamentaire et une sous-étape E52 de refroidissement de l'enroulement.

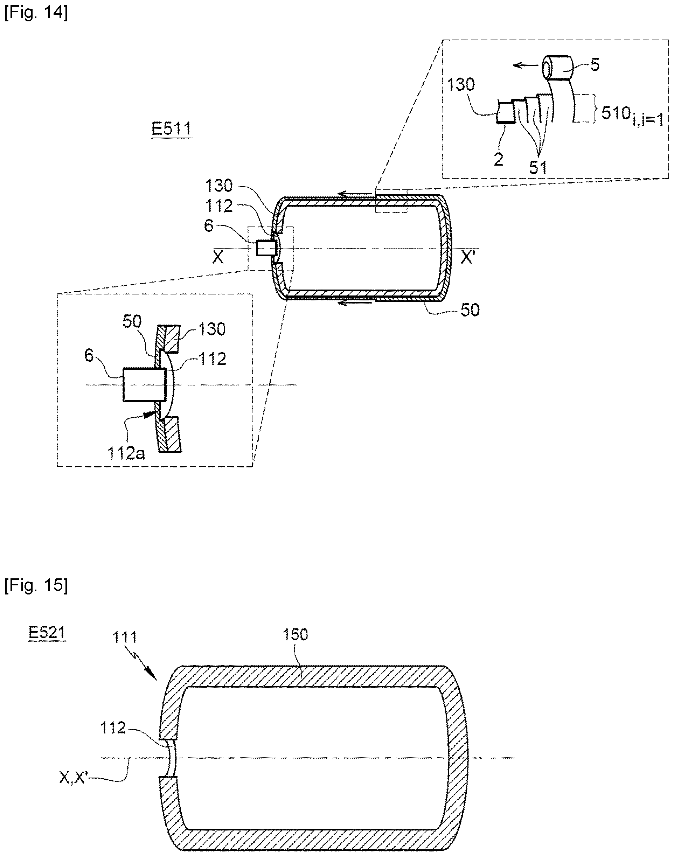

Deux modes de mise en oeuvre de la sous-étape E51 sont décrit ci-après, en relation avec les figures 13 et 14.

Dans sa mise en oeuvre la plus simple (aussi noté « premier mode de mise en oeuvre E51 » par la suite), illustrée sur la figure 13, la sous-étape E51 consiste à bobiner des sections successives 51 d'une deuxième bande 5 de matériau thermoplastique colmatable par chaleur et renforcé avec des fibres, autour de la paroi étanche 130.

Le matériau thermoplastique de la deuxième bande 5 est compatible chimiquement avec le matériau thermoplastique de la première bande 4 et donc, avec le matériau thermoplastique des fils 311,312 tricotés. On note que le matériau de la deuxième bande 5 est ainsi aussi compatible avec le matériau thermoplastique de la périphérie externe 112a ou de la surface externe de l'embase 112 (dans le cas où celle-ci est formée d'un matériau thermoplastique).

La deuxième bande 5 est similaire à la première bande 4 en ce qu'elle peut présenter la même largeur, la même épaisseur, ou encore des fibres de même nature ou/et de même géométrie de tissage.

En pratique, la paroi étanche 130 peut être mise en rotation (par exemple via la broche 6).

Le processus d'enroulement (ou d'embobinage) de la deuxième bande 5 est similaire à celui de la première bande 4. Ainsi, comme illustré sur la figure 13, les sections 51 bobinées successives de la deuxième bande 5 se recouvrent pour former une première couche 510i, i=1 de deuxième bande 5, et se recouvrent pour former des couches superposées 50 de deuxième bande 5. Le nombre n2 de couches superposées dépend des dimensions du réservoir 1 et peut être compris entre n2=2 et plusieurs centaines, par exemple n2=200.

L'enroulement multicouches de la deuxième bande 5 permet d'augmenter la perméabilité, la tenue mécanique et à la pression de la paroi étanche renforcée 150 (et donc de la paroi étanche 111 du réservoir 1) par rapport à un enroulement qui n'aurait que la première couche 510i, i=1.

L'épaisseur de chaque couche 510i, i=1 à n2 de deuxième bande 5 peut être par exemple comprise entre 50 µm et 300 µm. Au sein d'une même couche de deuxième bande bobinée, la distance de chevauchement axial peut par exemple être comprise entre 0 (correspondant à aucun recouvrement) et la moitié de la largeur de la deuxième bande 5.

Lors du bobinage E51 de deuxième bande 5, comme lors du bobinage E22 des sections 41 de première bande 4, une pression et un chauffage sont exercés sur chaque section 51 bobinée.

Plus précisément, la pression exercée sur chaque section 51 de deuxième bande bobinée est déterminée pour :
- 1) serrer cette section 51 contre les limites extérieures de la paroi étanche 130, et
- 2) pour serrer cette section 51 contre la couche 510i, i=1 à n2 de deuxième bande sous-jacente (lors de la formation des couches superposées de deuxième bande 5).

La température du chauffage exercée sur chaque section 51 bobinée de deuxième bande peut être identique à la température appliquée lors du bobinage de la première bande 4. Alternativement, La température du chauffage exercée sur chaque section 51 de deuxième bande bobinée est voisine, c'est-à-dire située dans la plage de température de fusion des matériaux thermoplastiques utilisés.

Ainsi, le matériau thermoplastique de chaque section 51 bobinée de deuxième bande 5 fusionne avec la région sous-jacente de la paroi étanche 130 et fusionne avec la couche sous-jacente de deuxième bande (lors de la formation des couches superposées de deuxième bande).

A l'issue de la sous-étape E51, les couches superposées 50 de deuxième bande 5 sont réunies avec la paroi étanche 130 pour former la paroi étanche 150 renforcée en une seule matière.

Lors de la sous-étape E52, la deuxième bande bobinée et la paroi étanche 130 sont refroidies et donc rigidifiées pour que la paroi étanche renforcée 150 soit consolidée et rigide. La paroi étanche renforcée 150 forme alors la paroi étanche 111 du réservoir 1.

Le refroidissement peut être réalisé après la sous-étape E51, c'est-à-dire une fois le bobinage de la deuxième bande 5 achevé.

Alternativement, le refroidissement peut être réalisé localement, au cours du bobinage E51 de la deuxième bande 5.

Le refroidissement E52 peut être réalisé de manière régulée en injectant à l'intérieur de la paroi étanche 130 de l'eau refroidie, et/ou en appliquant une pression sur la surface interne de la paroi étanche 130.

La figure 14 représente un mode de mise en oeuvre préférentiel E511 de la sous-étape E51. Selon ce mode préférentiel, la sous-étape E511 consiste à bobiner les sections successives 51 de la deuxième bande 5 non seulement autour de la paroi étanche 111 mais aussi sur la surface externe 112a de l'embase 112.

A l'issue de la sous-étape E511, les couches superposées 50 de deuxième bande 5 recouvrent ainsi aussi la périphérie externe 112a de l'embase 112.

Lorsque la périphérie externe 112a de l'embase est recouverte du matériau thermoplastique compatible avec le matériau thermoplastique de la paroi étanche 111, les couches superposées 50 de deuxième bande 5 sont réunies avec la paroi étanche 111 et avec la périphérie externe 112a de l'embase 112. La paroi étanche 150 renforcée (et donc la paroi étanche 111 du réservoir 1) est ainsi prolongée jusqu'à la circonférence de la broche 6 et formée d'une seule matière.

Après avoir exécuté un refroidissement E521 selon le procédé décrit précédemment en relation avec la sous-étape E52, on obtient la structure illustrée sur la figure 15.

Comme le montre la figure 15, grâce au mode de mise en oeuvre préférentiel E511, La paroi étanche 150 renforcée (et donc la paroi étanche 111 du réservoir 1) se prolonge jusqu'à la périphérie du passage intérieur de l'embase 112. Dit autrement, l'embase 112 est partiellement intégrée dans l'épaisseur de la paroi étanche 111. Cela permet d'éviter des ruptures de tenue à la pression autour du robinet du réservoir 1 et ainsi d'obtenir un réservoir 1 étanche et résistant mécaniquement aux pressions en jeu.

On note que la paroi étanche 111 du réservoir 1 obtenue en mettant en oeuvre la sous-étape E511 est avantageusement plus homogène que celle obtenue selon le premier mode de mise en oeuvre E51. En effet, cette paroi étanche 111 est alors formée selon tout son pourtour du même matériau renforcé. Cela permet d'obtenir un réservoir 1 ayant des propriétés d'imperméabilité, et des propriétés mécaniques identiques en tout point de sa paroi étanche 111. Cette homogénéité (spatiale) de la paroi étanche 111 permet de produire un réservoir 1 de meilleure facture.

Finalement, le procédé 100 peut comprendre, après l'étape E5, une étape (non représentée par les figures) consistant à appliquer le robinet 122 de l'embout 12 du réservoir 1 dans le passage intérieur de l'embase 112. Le réservoir 1 illustré sur la figure 2 est alors obtenu.

## Revendications

1. Procédé (100) de fabrication d'une paroi étanche (111) d'un réservoir étanche (1), le réservoir étanche (1) étant adapté pour contenir un gaz et/ou un liquide, le procédé de fabrication (100) comprenant les étapes suivantes :
- Monter (E1) un mandrin (2) réutilisable et amovible par montage/démontage d'arceaux (24), le mandrin (2) présentant une surface externe (21) de forme correspondant à une surface interne de la paroi étanche (111) du réservoir (1),
- Former (E2) la paroi étanche (111) du réservoir (1) sur la surface externe (21) du mandrin (2), en formant un orifice d'extraction (111d) du mandrin (2),
- Retirer (E3) le mandrin (2) hors de la paroi étanche (111) par l'orifice d'extraction (111d),
L'étape (E2) pour former la paroi étanche (111) étant effectuée en accomplissant les sous-étapes suivantes de :
- Formation (E21) d'une enveloppe (30) par application d'au moins un tricot (3) recouvrant la surface externe (21) du mandrin (2), le tricot (3) comportant une couche de fils tricotés (311, 312) formant des boucles, les fils tricotés (311, 312) étant d'un matériau thermoplastique colmatable par apport de chaleur,
- Bobinage (E22), autour de l'enveloppe (30) formée par le tricot (3) recouvrant la surface externe (21) du mandrin (2), de sections successives (41) d'une première bande (4) comprenant un matériau thermoplastique colmatable par apport de chaleur et renforcé de fibres, de sorte que les sections successives (41) de première bande (4) bobinées se recouvrent pour former une première couche (410i, i=1) de première bande et se recouvrent pour former des couches superposées (40) de première bande, le bobinage (E22) étant effectué en :
∘ Exerçant une pression choisie pour serrer chaque section (41) de la première bande bobinée contre l'enveloppe (30), formant la première couche (410i, i=1) de première bande, et pour serrer les sections recouvrant la première couche de première bande pour former les autres couches superposées (40) de première bande, et en
∘ Exerçant une température choisie pour fusionner le matériau thermoplastique de chaque section (41) de la première couche de première bande avec les fils tricotés (131, 132) sous-jacents de l'enveloppe (30), et pour fusionner les sections des couches successives de première bande,
- Refroidissement (E23) de l'enveloppe (30) et de la première bande (4) bobinée pour former la paroi étanche (130) en une seule matière.

2. Procédé (100) de fabrication d'une paroi étanche selon la revendication 1, dans lequel le matériau thermoplastique des fils tricotés (311, 312) est identique au matériau thermoplastique de la première bande.

3. Procédé (100) de fabrication d'une paroi étanche selon l'une des revendications 1 à 2, dans lequel le tricot (3) présente une masse par surface comprise entre 100 g/m² et 800 g/m².

4. Procédé (100) de fabrication d'une paroi étanche selon l'une des revendications 1 à 3, dans lequel le tricot (3) se présente sous la forme d'un ou plusieurs manchons, chaque manchon étant enfilé par une extrémité du mandrin.

5. Procédé (100) de fabrication d'une paroi étanche selon l'une des revendications 1 à 4, dans lequel la sous-étape (E21) de formation de l'enveloppe (30) comprend en outre l'application d'un deuxième tricot sur le premier tricot (3), le matériau thermoplastique des fils tricotés du deuxième tricot étant colmatable par apport de chaleur dans les mêmes conditions de température et de pression que le matériau thermoplastique des fils tricotés du premier tricot (3) sous-jacent.

6. Procédé (100) de fabrication d'une paroi étanche selon l'une des revendications 1 à 5, dans lequel, la sous étape (E22) de bobinage autour de l'enveloppe comprend le bobinage d'au moins une autre bande additionnelle, formée du matériau de la première bande, la bande additionnelle étant bobinée simultanément avec la première bande.

7. Procédé (200) de fabrication d'un réservoir étanche pour contenir un gaz ou un liquide, comprenant les étapes suivantes :
- Fabriquer une paroi étanche (130) du réservoir (1) en accomplissant les étapes (E1, E2, E3) du procédé de fabrication (100) selon l'une des revendications 1 à 6,
- Fermer (E4) la paroi étanche (130) en appliquant une embase (112) contre la paroi étanche (130),
- Consolider (E5) la paroi étanche (130) pour obtenir une paroi étanche renforcée (150, 111) du réservoir 1,
L'étape (E5) pour consolider la paroi étanche (130) étant accomplie en effectuant les sous-étapes suivantes de :
- Bobinage (E51, E511), autour la paroi étanche (130), de sections successives (51) d'une deuxième bande (5) comprenant un matériau thermoplastique colmatable par chaleur renforcé de fibres, de sorte que les sections successives (51) de deuxième bande bobinées se recouvrent pour former une première couche (5101) de deuxième bande (5) et se recouvre pour former des couches superposées (50) de deuxième bande (5), le bobinage (E51, E511) étant effectué en :
∘ exerçant une pression choisie pour serrer chaque section (51) de la deuxième bande bobinée contre la paroi étanche (130), formant la première couche (510i, i=1) de deuxième bande, et pour serrer les sections recouvrant la première couche de deuxième bande pour former les autres couches superposées de deuxième bande, et en
o exerçant une température choisie pour fusionner le matériau thermoplastique de chaque section de la première couche de deuxième bande avec la région sous-jacente de la paroi étanche (130), et pour fusionner les sections des couches successives de deuxième bande,
- Refroidissement (E52) de la paroi étanche (130) et de la deuxième bande (5) pour former la paroi étanche renforcée (130, 111) en une seule matière.

8. Procédé (200) de fabrication d'un réservoir étanche selon la revendication 7, dans lequel les matériaux thermoplastiques de la première et de la deuxième bande sont identiques.

9. Procédé (200) de fabrication d'un réservoir étanche selon la revendication 7 à 8, dans lequel l'embase (112) présente une surface périphérique externe recouverte d'un matériau thermoplastique colmatable par chaleur et compatible avec le matériau thermoplastique de la paroi étanche (130).

10. Procédé (200) de fabrication d'un réservoir étanche selon l'une des revendications 7 à 9, dans lequel la surface externe de l'embase (112) est recouverte par la deuxième bande lors de ladite étape (E5) de consolidation de la paroi étanche (130).
